# EUROPEAN PATENT SPECIFICATION

(11) **EP 2 481 978 B1**
(45) Date of publication and mention of the grant of the patent: **08.04.2015**
(21) Application number: 11152473.2
(22) Date of filing: 28.01.2011
(51) Int. Cl.: F21V 8/00, G02B 6/00, F21S 8/10, B60Q 1/26, B60R 1/12

(54) **Rear view mirror comprising a hollow light guide**
Rückspiegel mit einem Hohllichtleiter
Retroviseur comprenant un guide lumineux creux

(43) Date of publication of application: 01.08.2012
(73) Proprietor: SMR Patents S.à.r.l., 1653 Luxembourg (LU)
(72) Inventor: Wilson, Douglas J., Butchville, MI 48059 (US); Mayea, Chad, Marysville, MI 48040 (US)
(74) Representative: Weber-Bruls, Dorothée

(56) References cited:
- EP-A1- 1 304 260
- DE-A1- 19 740 316
- DE-A1-102007 033 221
- US-A- 4 260 220
- US-A- 4 805 984

## Description

The invention relates to a rear view mirror for a vehicle comprising a lighting element according to the preamble of claim 1.

### Prior Art

Several different solutions are known from prior art showing lighted elements at vehicle using light guides molded from plastic materials. The advantage of using a light guide is that the light source and the electrical elements to drive the light source together with the heating issues of a light source can be placed apart from the lighted areas and away from the mirror inner components such as glass backing plate swing arc, etc. This results in a higher level of design freedom to arrange electrical and lighted elements. Examples of different designs using light guides are disclosed in US 7,255,464 and its European family member EP 1 304 260 A1. These disclosures in fact teach a rear view mirror in line with the preamble of claim 1.

The light guides for turn signal indicators or security lights are bulky elements using PMMA as a preferred material. The thickness of the light guides can be high forming large areas for coupling light in the light guide. It is also known in industry to use hollow light guides for illumination purposes in such applications as tunnel lights or street lights. But a simple hollow light guide may not totally guide light for reflection conditions and the desired lighting requirements may not be fulfilled.

Based on totally internally reflecting light conduits known from EP 0 236 030 A1 or US 4,805,984, EP 0 789 854 B1 of University of British Columbia discloses that prismatic materials could be used to create a "prism light guide," a hollow structure that can efficiently transport large quantities of light. This solution is a pipe whose transparent walls are formed on the outside into precise prismatic facets. The facets are efficient total internal reflection mirrors which prevent light traveling down the guide from escaping. Very little light is absorbed by the pipe because light travels primarily in the air space within the hollow guide. And, because the guide is hollow, weight and cost factors are much more favorable than would be the case with very large solid fibers or rods.

US 4,260,220 refers to prism light guides having surfaces which are in octature. The first guides were constructed as disclosed in US 4787708 as rectangular rigid acrylic pipes with molded-in prisms, and each side of the rigid panel is flat. While the original concept was born from the early dream of piping sunlight to the interiors of artificially lit buildings, it quickly became clear that prism light guides had applicability in a variety of diverse applications and markets.

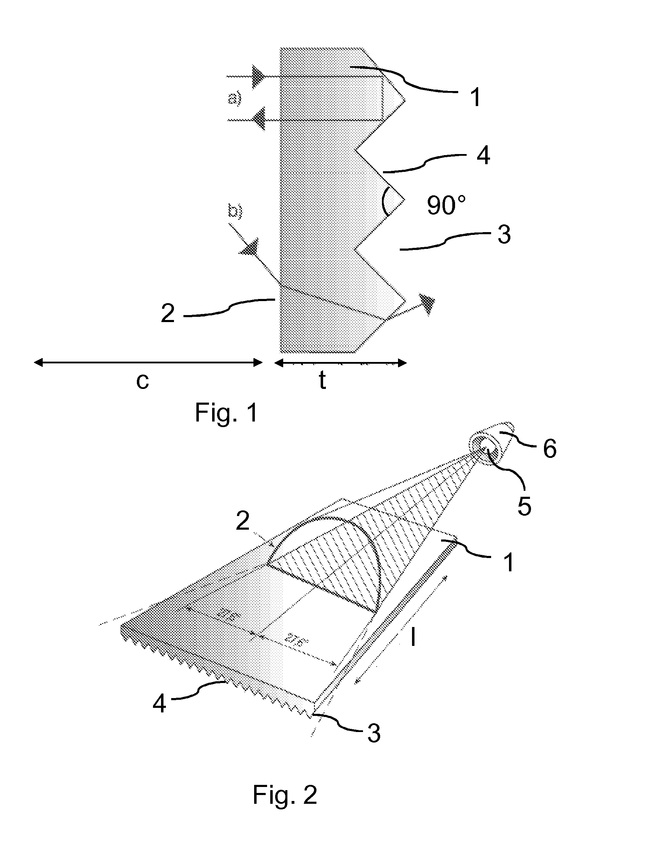

US 5,339,382 teaches to improve the macro-prism structure which existed in the first thick walled rigid acrylic panels by making it as a continuous thin film incorporating microscopic prisms with the same 90° geometry as shown in Figure 1. The geometry of this film is known as 3M Brand Optical Lighting Film. The material is made from either acrylic or polycarbonate polymer resins which have been especially selected for their physical and optical properties. The acrylic film is more stable in certain adverse environments. Polycarbonate films, on the other hand, are tougher, can operate at higher temperatures, and have better handling properties. Very low light absorption in both materials is the critical feature which allows the film to transport and distribute light efficiently.

There is a need to create a lighting device for automotive use with an improved light guiding function and high freedom of design. Such lighting elements can be used in head or tail lights; in turn signal indicators positioned in front or rear or in the exterior rear view mirrors, or in lamps in the interior of the vehicle, as illumination source for dash boards or displays. The object of the invention is to further develop the known rear view mirror for a vehicle to comprise a lighting element with a light guiding device with improved function and high degree of design freedom.

This problem is solved the rear view mirror of claim 1. Preferred embodiments of said rear view mirror are described by claims 2 to 5.

### Brief Description of the Drawings

Figure 1 shows the total reflection in a commercially available prismatic film.
Fig. 2 shows the preferred angle of incident light for the film of Fig. 1.
Fig. 3 shows a cylindrical light tube.
Fig. 4 shows examples of a turn signal indicator light, with a perspective view and a cross section of a bulky light guide and a cross section of a hollow light guide used with the invention.
Fig. 5 shows further examples of hollow light guides.
Fig. 6 shows still further examples of hollow light guides.

### Detailed Description

For automotive use the hollow light guide is quite interesting for it saves material, lowers the relative injection molding cycle time, allows for a remote light location in relation to the mirror bezel and allows a better light guiding function as it is realized in bulky light guides that absorbs much more of the input light energy.

Figure 1 shows an example of a prismatic optical film 1 with is commercially available with a normal thickness of 0.5 mm, having an internal side 2 facing to the core c of the hollow light guide and an external side 3. The light path a) explains the total reflection of light at the prism structures 4. A light beam enters into the prismatic optical film and is deflected according the difference in the diffraction index of the material versus air. The prismatic faces 4 form an angle of 90 degrees. If the incident light beam is entering the prismatic structure with an angle lower than the total reflection angle of the special material set, the beam is totally reflected and travels back into the air gap core c. Path b) shows a light beam emitted out of the core c of the light guiding tube that have walls like the prismatic optical film 1. For the beam's incident angle is higher than the total reflection angel the beam is diffracted and leaves the light guide tube. The degree to which the film's prisms shown in Figure 1 deviate from perfect prisms also affects the efficiency of the total internal reflection process, and, therefore, the effectiveness of the film in transporting and distributing light. Of course, the prisms will not be absolutely perfect, so reflectance of the film will not be 100%. Absorption and transmission will occur. Absorption, as was mentioned above, is due in part to bulk absorptivity of the resin used to produce the film, and is an irretrievable loss from the optical system, as the light beams travels in the core c of the light tube and since the projected light only uses the thickness to be reflected, the loss is much lower than in conventional light guides.

Transmission results from imperfections in the form of the surfaces. Examples of these imperfections include 90° corners which are not precise, surfaces which are not optically flat or which deviate from the correct angle, optical inhomogeneities in the material, etc. Transmission, while generally undesirable if not controlled, can be used to advantage if one goal of the application is light distribution. With the typical losses due to absorption and transmission, the reflectance efficiency of prismatic films has been calculated as approaching 99%. Circular hollow light guides can be produced in a variety of sizes which may be required for specific applications.

Hollow prismatic light pipes act as either a nearly perfect mirror or transparent window depending upon the angle that light strikes the material. For example, the path of a light ray in a flat hollow prism light guide is shown in Figure 2. Light enters the device from an external light source 5, shown as a lamp in Figure 2 with accompanying reflector 6. It first strikes the smooth, unstructured side of the film, is refracted according to Snell's law, and passes through the smooth side to strike one of the prism surfaces. If the ray strikes the surface at an angle greater than the critical angle as shown in light path a) of Fig. 1, it reflects by total internal reflection, and heads for the other prism face. If it reflects again, it returns to the interior of the tube for further propagation. The ray spends relatively little time in the film plastic bulk, especially if the film is thin, and benefits from the low absorption of propagation through air. Since the reflectivity of the film depends directly upon the angle at which the light rays strike the prism surface, it is obvious that the characteristics of the light source and reflector used to collimate the light are critical to the performance of a prism light guide. For the plastic materials, light must enter the guide at an angle of 27.6° or less from the axis of the guide. In other words, the cone of light from the source should form a 55.2° angle, as shown in Fig. 2.

A "perfect" prism light guide would reflect all rays that entered within that 55.2° cone. However, as discussed above, imperfections in the film cause some of the light to be transmitted through the film and escape from the guide, making it glow and illuminating the space around the guide. Generally, in the case of hollow light guides, one attempts to "manage" the rate at which light leaks from the tube, and create uniformity of light escaping along the entire length. One of the most efficient ways to get light out of the tube is to place an additional film (referred to as an "extractor" film) inside the tube to "interrupt" light ray propagation and create uniform light escape from the tube as disclosed in US RE37,594 E. Another method is to simply cut holes in the prismatic film.

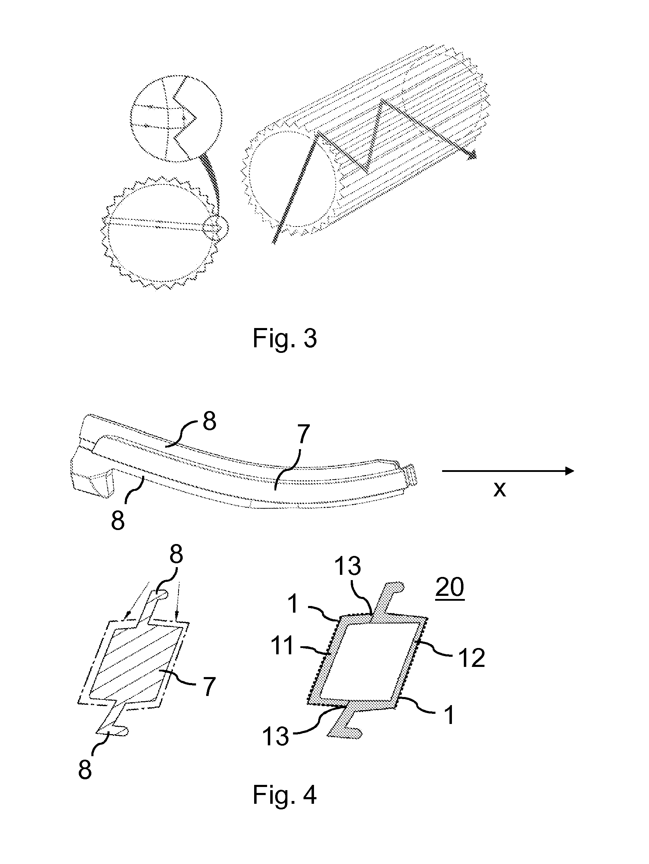

Figure 3 shows a perfect circular shaped hollow light guide for optimized transport of light. This hollow light guide 20 allows transport of light over the distance I, being illuminated in a smooth way. For automotive use it is not necessary for all purposes that the hollow light guide 20 emits light all around the surface. In several special embodiments only a part of the surface of the hollow light guide is visible and therefore only this part must emit light.

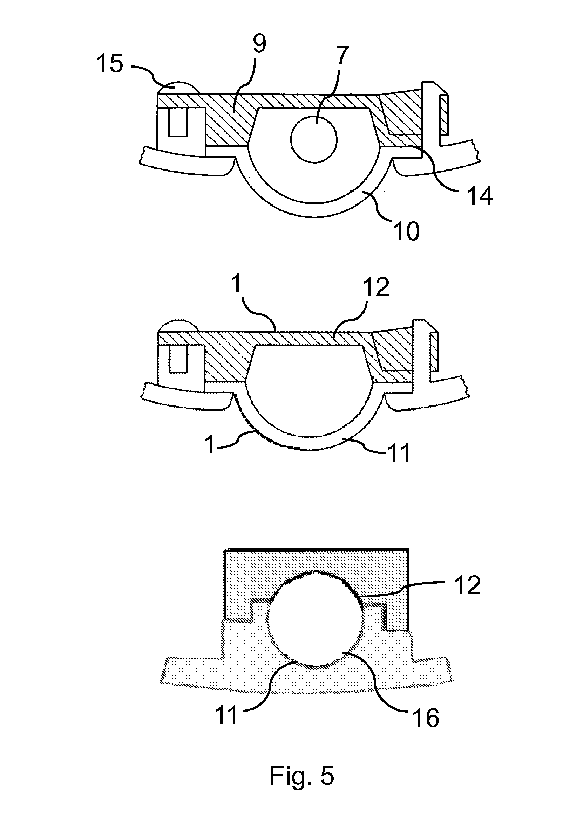

Figures 4 and 5 provide examples of typical turn signal indicator light guides as mounted in vehicle lamps or vehicle's rear view mirrors. Such a lamp consists of a housing 9 and a lens 10 covering the housing and protecting the interior of the housing from invasive humidity and dust. The housing contains all electrical and lighting elements and also light guides at separate parts or integrated into the lens.

In a first embodiment of Figure 4 a bulky light guide 7 has a form that follows smoothly the outer contour of the vehicle or the rear view mirror. The bulky light guide 7 has the function of a lens 10 too. The bulky light guide 7 is shown in a cross section on the left lower side of Figure 4. The cross section shows a trapezoid form filled with light guiding material. On top and at the bottom of the light guide core two arms 8 of the same material form a connection part to the housing. On the right lower side of Figure 4 the solution according to the invention is shown in a cross section. The hollow light guide 20 is formed with an inner wall 12, the side which faces to the housing interior, and an outer wall 11, the side that covers the device to the outer side of the lighting element. The two walls are fixed together at surfaces 13, so that they can be easily produced as two molded parts. The connecting parts 8 are integrally formed with the wall 12. To improve light travelling along light guide axis x at least a part of the surfaces of the walls are covered by a prismatic structure. The prismatic structure can be integrated molded producing the walls of the hollow light guide 20. Integrated prismatic structures are not easy to realize in conventional molded products, but due to the fact that the light travelling lengths are not high in automotive use the loss of energy by imperfect structures would be acceptable. If better performance is required a prismatic film is preferably used to cover the plane surfaces of the walls 11,12 at the walls' outside faces. In Fig. 4 both walls 11 and 12 are covered by the film, in another embodiment the film only covers the inner wall 12 and the visible side of wall 11 is only a smooth surface.

The prismatic film 1 is fixed by a special optical transparent glue foil or by any welding techniques, as ultrasonic or laser welding. The welding points that connect prismatic foil 1 to the walls 11, 12 of the light tube 20 disturb the prismatic structure and are used to couple light out of the light tube.

The hollow light guide allows a point light source to appear as an area source. Light can also be distributed uniformly to avoid "hot spots" which are often associated with point light sources. In addition, light can be transported from the location of the light source to a remote location where - as an example for a turn signal in a rear view mirror- light must be emitted in a defined angle and power level to follow regulations. So light emitted at the internal end 40 of the lighting element is transported to the end face 41 where the light is projected out to fulfill regulation requirements.

The lightweight construction of the hollow light guide with reduced wall thickness requires less structural support in the lamp housing. The light source (5 is placed apart from the light tube and the prismatic foils so that there is no heat dissipation that could damage the prismatic structure.

Figure 5 shows three cross sections of different light guide types. On the top a conventional bulky light guide 7 is hosted in a lighting device housing 9. The housing is covered by a lens 10, that closes the housing and protects the bulky light guide 7. Housing 9 and the lens 10 are connected by connection means as screws 15 or by any other connection 14 such as gluing, or welding or snap-fits, etc. A similar structure with the inventional solution is shown in the middle of figure 5. The bulky light guide is extracted and housing 9 and lens 10 forms in result a hollow light guide 20. The light travels in the core area c and is total reflected by walls 12 and 11 of the light tube structure. For this purpose rear side of the wall 12 is covered by a prismatic optical film 1, and outer side of wall 11 can be also covered at least in part by a prismatic optical film. At the bottom of Figure 5 another example of a hollow light guide is shown. The hollow core c is covered by a two part wall structure that forms the circle hollow air gap. The inner sides of the wall are coated at least partly with a reflective layer. With a metallic layer 16 as an Aluminum layer transport of light in the air gap is possible but with higher energy loss than using prismatic optical films. If the light tube must be visible from outside, only a part of the inner walls will be coated with metal, so that a portion of the light travelling along can be emitted through the wall 11. For the length of light tubes in automotive use are short, it is not necessary to design a perfect light guiding tube. Open parts not coated and not covers by prismatic foils can be used to led light shine through.

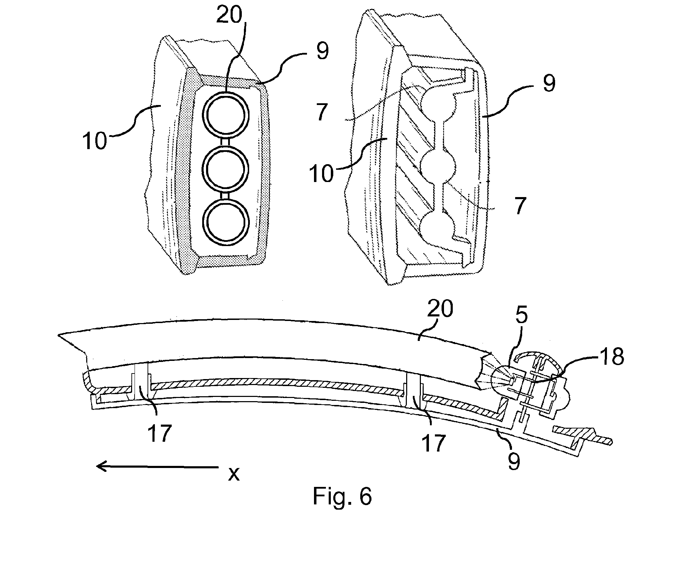

Figure 6 shows further embodiments wherein the conventional three bulky light guides are extracted and a hollow light tube is installed. The top right part of the figure shows a housing 9 covered by a lens 10. In the housing three parallel bulky light guides are mounted. At the left of the figure a version of a hollow light guide is shown wherein the bulky light guides are replaces by the hollow tubes. The hollow light guides are mounted in the same way as the bulky light guides. At the bottom of the figure a cross section of this embodiment along the axis x is shown. The hollow light tube 20 is mounted in a housing 9 with posts 17. The light source 5 is installed on a printed circuit board 18, that fits into a groove of the housing 9. The light of the source 5 is directed into the light tube 20. It is possible to have an additional cover lens to protect housing and light guide against environmental influences. Especially if a prismatic optical film 1 is used a protective lens makes sense to optimize the light guiding effect the prismatic optical film is attached to all outer sides of the tube 20. In another embodiment the light tube 20 forms the outer lens of the lighting device integrally. Alternatively the use of reflective coatings at the inner walls is a possibility to guide light in the tube.

For an optimal appearance the emitted light should be directed. For this purpose the prismatic structures are modified to couple light out in defined directions. The decoupling optics can be molded directly to form the hollow light guide. Alternatively there are prismatic film materials for redirecting light. The structure of this film has prism angles at 70° instead of 90°. The way in which this film interacts with incident light is quite different. When the film is positioned so that the groove direction is perpendicular to the direction that the light is traveling within a hollow light guide, light which strikes the groove side of the film at a grazing angle (less than about 20° will be bent 90°. This film has found use in helping to achieve uniform light extraction from our internally illuminated signs, as well as in redirecting light in a preferred direction from other hollow light guides.

## Claims

1. Rear view mirror for a vehicle comprising a housing and a
lighting element with a light guiding
device in form of a turn signal indicator light guide mounted to direct light from at least one light source to at least one decoupling area of the light guide wherein the light guide is made of plastic material, **characterized in that** the light guide is a hollow light guide (20) with an air gap core (c) limited by two walls (11, 12), the light guide (20) being formed with an inner wall (12) at a side facing a housing interior and an outer wall (11) at a side covering the device to the outer side of the lighting element,
the two walls (11, 12) are fixed together at surfaces (13) and are produced as two molded parts,
connecting parts (8) for a connection with the housing are integrally formed with the inner wall (12),
at least a part of the surfaces of the walls (11, 12) is covered by a prismatic structure such that
the light is mainly guided in the air gap core (c) with light travelling along the light guide axis and being at least partly reflected by total reflection effects by the walls (11, 12).

2. Rear view mirror according to claim 1, **characterized in that** the walls (11,12) form a tube (20) with trapezoidal cross section.

3. Rear view mirror according to claim 1 or 2, **characterized in that** the plane surfaces of the walls (11, 12), at the walls' outside faces, are covered by a total reflective prismatic film (1), or the inner wall (12), at the wall's outside face,
is covered by a total reflective prismatic film (1) and the visible side of the outer wall (11) is a smooth surface.

4. Rear view mirror according to claim 1 or 2, **characterized in that** the walls (11, 12) have a prismatic outer surface molded with the walls as one piece.

5. Rear view mirror according to any one of the claims 1 to 4, **characterized in that** the walls (11, 12) of the hollow light guide (20) follow the outer contour of the rear view mirror.

## Patentansprüche

1. Rückspiegel für ein Fahrzeug, umfassend ein Gehäuse und ein Beleuchtungselement mit einer lichtleitenden Vorrichtung in Form eines Blinksignalanzeiger-Lichtleiters, der so angebracht ist, dass er Licht von wenigstens einer Lichtquelle zu wenigstens einem Auskopplungsbereich des Lichtleiters leitet, wobei der Lichtleiter aus Kunststoff gefertigt ist, **dadurch gekennzeichnet, dass**
der Lichtleiter ein Hohllichtleiter (20) mit einem durch zwei Wände (11, 12) begrenzten Luftspaltkern (c) ist, wobei der Lichtleiter (20) auf einer Seite, die einem Gehäuseinneren zugewandt ist, mit einer Innenwand (12) und auf einer Seite, welche die Vorrichtung zur Außenseite des Beleuchtungselements hin abdeckt, mit einer Außenwand (11) ausgebildet ist,
wobei die zwei Wände (11, 12) an Oberflächen (13) aneinander befestigt sind und als zwei Formteile hergestellt sind,
Verbindungsteile (8) für eine Verbindung mit dem Gehäuse einstückig mit der Innenwand (12) ausgebildet sind,
wenigstens ein Teil der Oberflächen der Wände (11, 12) von einer Prismenstruktur bedeckt ist, so dass
das Licht hauptsächlich in dem Luftspaltkern (c) geleitet wird, wobei sich Licht entlang der Lichtleiterachse bewegt und aufgrund von Totalreflexionswirkungen durch die Wände (11, 12) wenigstens teilweise reflektiert wird.

2. Rückspiegel nach Anspruch 1, **dadurch gekennzeichnet, dass**
die Wände (11, 12) eine Röhre (20) mit trapezförmigem Querschnitt ausbilden.

3. Rückspiegel nach Anspruch 1 oder 2, **dadurch gekennzeichnet, dass** die ebenen Oberflächen der Wände (11, 12) auf den Außenflächen der Wände von einer totalreflektierenden Prismenfolie (1) bedeckt sind oder die Innenwand (12) auf der Außenfläche der Wand von einer totalreflektierenden Prismenfolie (1) bedeckt ist, während die sichtbare Seite der Außenwand (11) eine glatte Fläche ist.

4. Rückspiegel nach Anspruch 1 oder 2, **dadurch gekennzeichnet, dass** die Wände (11, 12) eine Prismenaußenfläche aufweisen, die einstückig mit den Wänden geformt ist.

5. Rückspiegel nach einem der Ansprüche 1 bis 4, **dadurch gekennzeichnet, dass** die Wände (11, 12) des Hohllichtleiters (20) der Außenkontur des Rückspiegels folgen.

## Revendications

1. Rétroviseur pour un véhicule comprenant un boîtier et un élément éclairant avec un dispositif de guidage de lumière sous la forme d'un guide de lumière d'indicateur de signal de virage monté pour diriger une lumière provenant d'au moins une source de lumière vers au moins une zone de découplage du guide de lumière, le guide de lumière étant constitué de matière plastique, **caractérisé en ce que**
le guide de lumière est un guide de lumière creux (20) ayant un noyau d'espace d'air (c) limité par deux parois (11, 12), le guide de lumière (20) étant formé d'une paroi intérieure (12) au niveau d'un côté dirigé vers l'intérieur du boîtier et d'une paroi extérieure (11) au niveau d'un côté recouvrant le dispositif sur le côté extérieur de l'élément éclairant,
les deux parois (11, 12) sont fixées ensemble au niveau de surfaces (13) et sont produites sous la forme de deux parties moulées,
des parties de liaison (8) pour une liaison avec le boîtier sont formées d'un seul tenant avec la paroi intérieure (12),
au moins une partie des surfaces des parois (11, 12) est recouverte par une structure prismatique de telle sorte que
la lumière est principalement guidée dans le noyau d'espace d'air (c) en ayant une lumière se déplaçant le long de l'axe de guidage de lumière et étant au moins partiellement réfléchie par des effets de réflexion totale par les parois (11, 12).

2. Rétroviseur selon la revendication 1, **caractérisé en ce que** les parois (11, 12) forment un tube (20) ayant une section transversale trapézoïdale.

3. Rétroviseur selon les revendications 1 ou 2, **caractérisé en ce que** les surfaces planes des parois (11, 12), au niveau des faces extérieures des parois, sont recouvertes par
un film prismatique de réflexion totale (1), ou
la paroi intérieure (12), au niveau de la face extérieure des parois, est revêtue d'un film prismatique à réflexion totale (1) et le côté visible de la paroi extérieure (11) est une surface lisse.

4. Rétroviseur selon les revendications 1 ou 2, **caractérisé en ce que** les parois (11, 12) ont une surface extérieure prismatique moulée avec les parois sous la forme d'une seule pièce.

5. Rétroviseur selon l'une quelconque des revendications 1 à 4, **caractérisé en ce que** les parois (11, 12) du guide de lumière creux (20) suivent le contour extérieur du rétroviseur.
